(19) **Europäisches Patentamt**

**European Patent Office**

**Office européen des brevets**

(11) **EP 1 424 756 B1**

(12) **FASCICULE DE BREVET EUROPEEN**

(45) Date de publication et mention
de la délivrance du brevet:
**13.12.2006 Bulletin 2006/50**

(51) Int Cl.:
*H02B 1/20* (2006.01)     *H01R 9/26* (2006.01)
*H01R 13/629* (2006.01)

(21) Numéro de dépôt: **03354075.8**

(22) Date de dépôt: **29.09.2003**

(54) **Dispositif de raccordement électrique d'un appareil électrique modulaire à un peigne de raccordement ou analogue**

Elektrische Verbindungsanordnung eines electrischen Apparates mit einem modularen Verbindungskamm oder ähnlich

Electrical connecting device of an electrical apparatus with a modular connecting comb or similar

(84) Etats contractants désignés:
**AT BE BG CH CY CZ DE DK EE ES FI FR GB GR HU IE IT LI LU MC NL PT RO SE SI SK TR**

(30) Priorité: **29.11.2002 FR 0215056**

(43) Date de publication de la demande:
**02.06.2004 Bulletin 2004/23**

(73) Titulaire: **SCHNEIDER ELECTRIC INDUSTRIES SAS**
**92500 Rueil-Malmaison (FR)**

(72) Inventeurs:
• **Caire, Jean**
**38050 Grenoble cedex 09 (FR)**

• **Lebouc, Didier**
**38050 Grenoble cedex 09 (FR)**
• **Maulat, Catherine**
**38050 Grenoble cedex 09 (FR)**

(74) Mandataire: **Tripodi, Paul et al**
**Schneider Electric Industries SAS**
**Propriété Industrielle - E1**
**38050 Grenoble Cédex 09 (FR)**

(56) Documents cités:
**EP-A- 0 599 362**     **EP-A- 0 788 205**
**EP-A- 0 909 122**     **US-A- 3 321 731**

EP 1 424 756 B1

## Description

La présente invention concerne un dispositif de raccordement électrique d'un appareil modulaire électrique à un peigne de raccordement ou analogue, ledit appareil étant logé dans un boîtier de forme sensiblement parallélépipédique comportant une face arrière de fixation à un support de montage et comportant au moins un conducteur rigide situé sur ladite face arrière de l'appareil, ledit appareil et ledit peigne étant aptes, au moment de l'opération de raccordement, à être montés en rotation l'un par rapport à l'autre autour d'un axe de rotation, entre une position de déconnexion et une position de connexion du(des) conducteur(s) de l'appareil avec un(des) conducteur(s) appartenant au peigne.

L'alimentation électrique des appareils modulaires peut être assurée par des peignes munis de dents que l'on enserre dans des bornes ou des vis de connexion. Dans le but de simplifier et de fiabiliser ce raccordement, la connexion peut être réalisée par embrochage des conducteurs des appareils dans des pinces élastiques prévues à l'intérieur des peignes. Cette opération d'embrochage peut être réalisée suivant un mouvement de translation. Ce type d'embrochage nécessite un effort non négligeable pour l'opérateur et se traduit par une poussée importante sur le peigne et son support. Cette opération est donc fastidieuse et peut engendrer des déformations des supports tels les rails ou les peignes, car ces supports sont réalisés en profilés présentant une bonne résistance en flexion mais une très faible résistance en torsion. Cette opération peut en outre engendrer un montage incomplet donc dangereux. Cette opération d'embrochage peut également être réalisée suivant un mouvement de rotation. On connaît par exemple des appareils modulaires comportant sur leur face arrière de fixation à un support de montage, un conducteur sous forme de pince et des moyens, également sous forme de pince, permettant le montage en rotation de l'appareil autour d'un axe prévu sur le peigne, ce conducteur et ces moyens de montage en rotation étant situés respectivement aux deux extrémités opposées de la face arrière de l'appareil au voisinage respectivement de la face supérieure et de la face inférieure de l'appareil. Dans ce type d'appareil, les efforts d'embrochage ont été démultipliés, en utilisant le principe du bras de levier. Il en résulte que les efforts requis pour réaliser l'embrochage et les efforts transmis aux supports ont été réduits. Cependant, ces derniers sont encore trop importants.

Et l'on connaît également le document EP 0 909 122 considéré comme étant l'état de la technique le plus proche et décrivant un appareil électronique logé dans un boîtier comportant une partie supérieure et une partie inférieure, cette partie inférieure constituant un peigne destiné à être monté sur un rail de montage. La partie supérieure du boîtier comporte des connexions pour des câbles électriques reliées électriquement à des actionneurs ou capteurs. Ces connexions sont reliées électriquement avec la partie inférieure du boîtier au moyen de prises. La partie inférieure du boîtier comporte un système électronique et est reliée avec un système de bus. La partie supérieure et le peigne sont montés en rotation, l'un par rapport à l'autre, au moment de l'opération de raccordement, entre une position de déconnexion et une position de connexion du (des) connecteur(s) de l'appareil avec le(les) conducteur(s) appartenant au peigne.

La présente invention résout les problèmes précédemment mentionnés et propose un dispositif de raccordement électrique d'un appareil modulaire à un peigne de raccordement, dans lequel les efforts transmis aux supports mécaniques sont réduits, le confort de l'opérateur amélioré, et la fiabilité d'embrochage plus importante.

A cet effet, la présente invention a pour objet un dispositif de raccordement électrique selon la revendication 1.

Selon une réalisation particulière de l'invention, l'axe de rotation précité est plus éloigné de l'axe central du rail que du point de connexion du(des) conducteur(s) sur le peigne.

Selon une caractéristique particulière, le point de connexion précité se situe entre l'axe de rotation et l'axe central du rail.

Selon une autre caractéristique, ce dispositif comporte un pivot prévu sur l'appareil ou sur le peigne destiné à coopérer avec une surface d'appui réalisée sur le peigne ou respectivement l'appareil, de manière que ladite surface assure le guidage en rotation du pivot par rapport au peigne entre les deux positions précitées de l'appareil.

Mais d'autres avantages et caractéristiques de l'invention apparaîtront mieux dans la description détaillée qui suit et se réfère aux dessins annexés donnés uniquement à titre d'exemple et dans lesquels

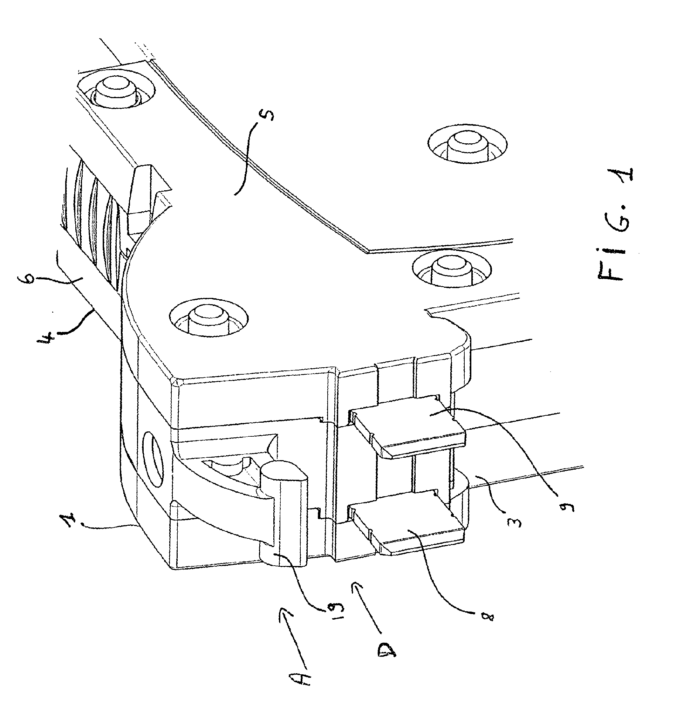

- La figure 1 est une vue partielle, en perspective, d'un appareil électrique modulaire comportant une partie d'un dispositif de raccordement selon l'invention,

- Les figures 2,3 et 4 sont des vues partielles, en perspective, d'un appareil modulaire et d'un peigne de raccordement, équipés d'un dispositif de raccordement selon l'invention, les figures illustrant respectivement le dispositif dans une position avant raccordement, dans une position intermédiaire de raccordement et dans une position raccordée, les figures illustrant respectivement le dispositif dans une position avant raccordement, dans une position intermédiaire de raccordement et dans une position raccordée,

- La figure 5 est une vue partielle en coupe, d'un peigne et d'un appareil modulaire équipés d'un dispositif de raccordement selon l'invention, suivant un plan perpendiculaire à la direction longitudinale du peigne, dans une position raccordée du dispositif de raccordement,

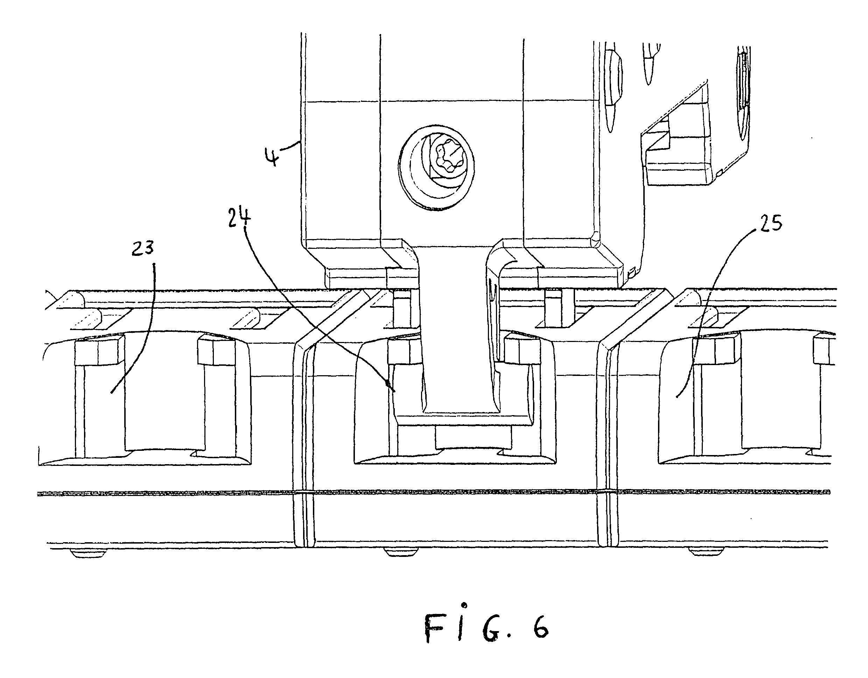

- La figure 6 est une vue partielle de dessus d'un peigne et d'un appareil électrique modulaire équipés d'un dispositif de raccordement selon l'invention, en position raccordée du dispositif de raccordement ,et

- La figure 7 est une représentation schématique d'un appareil modulaire raccordé à un peigne au moyen d'un dispositif selon l'invention, illustrant le couple de torsion exercé sur le rail.

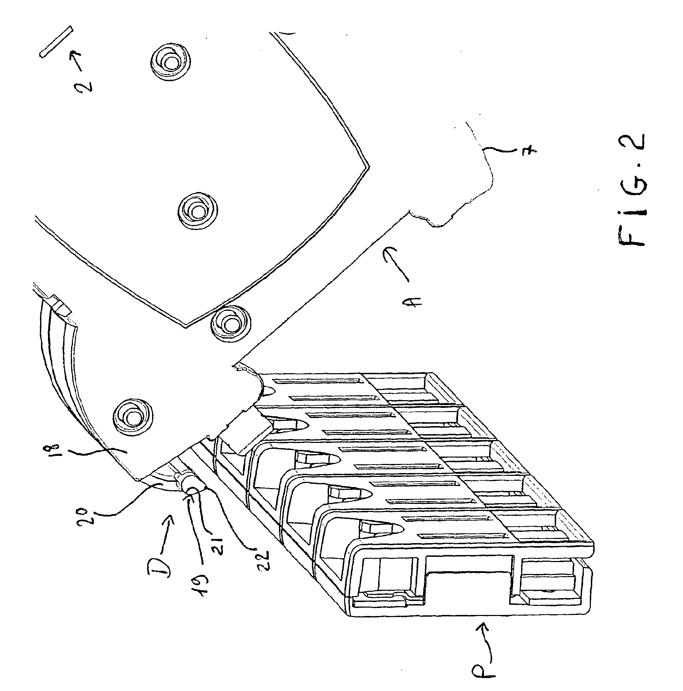

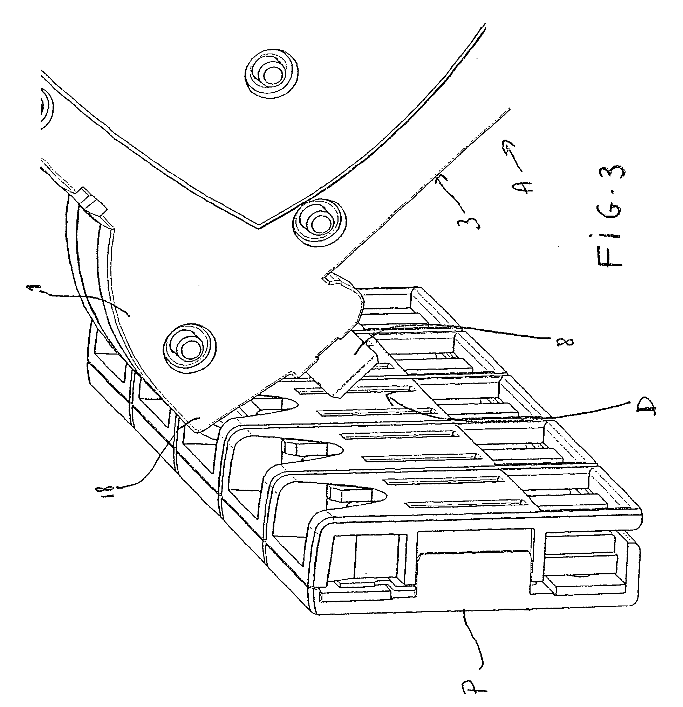

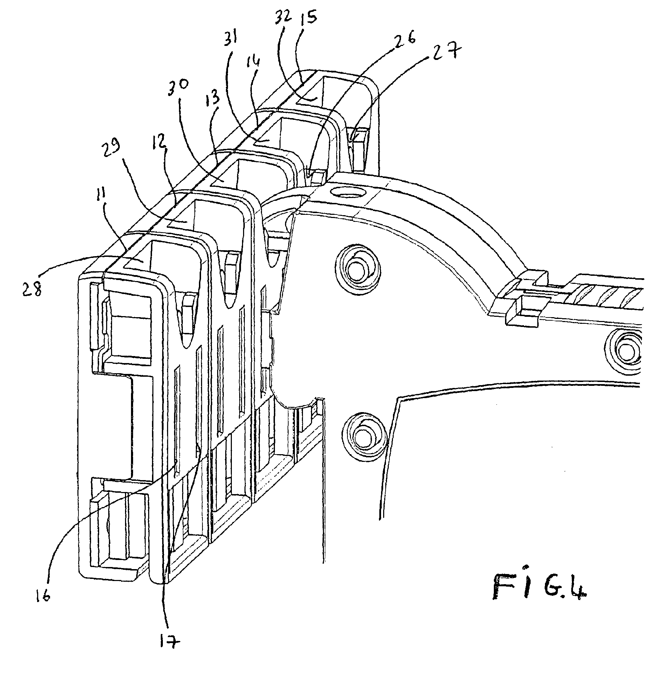

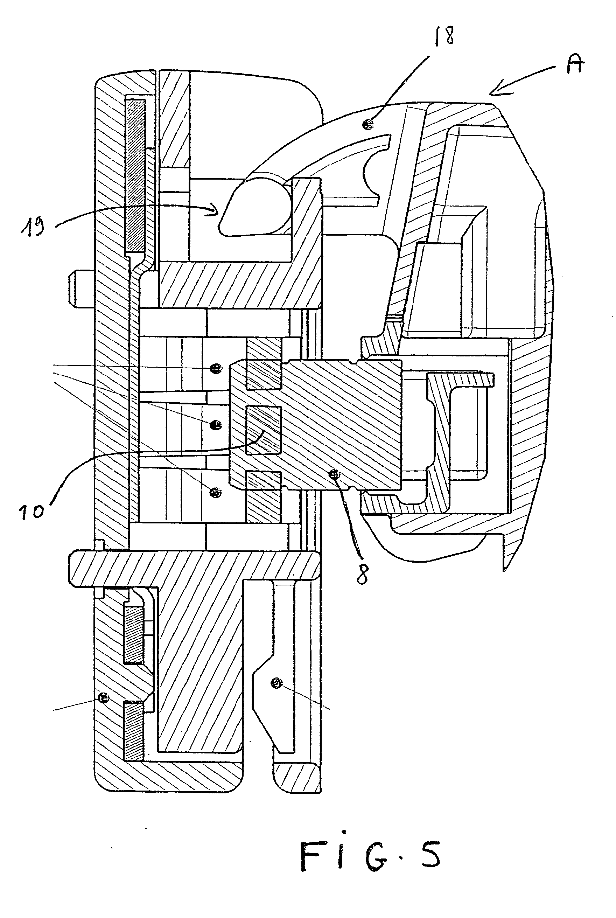

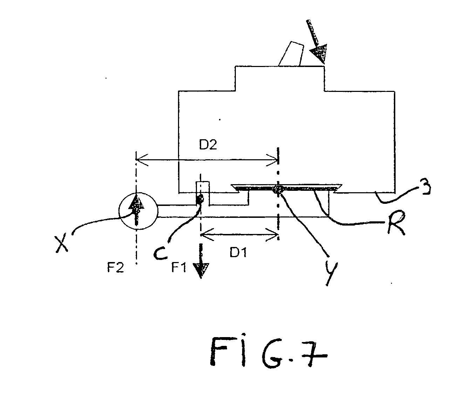

Sur les figures, on voit un appareil électrique modulaire A, un disjoncteur, destiné à être alimenté électriquement par un peigne de raccordement P au moyen d'un dispositif de raccordement électrique D selon l'invention. Cet appareil électrique A est logé dans un boîtier 1 de forme sensiblement parallélépipédique comprenant une face avant 2 comportant des organes d'actionnement de l'appareil A, une face arrière 3 par laquelle l'appareil A peut être fixé sur un rail de montage R (représenté sur la figure 7), deux faces latérales parallèles 4,5 par lesquelles deux appareils A montés côte à côte sur le rail peuvent être accolés, une face supérieure 6 et une face inférieure 7. Cet appareil A comporte sur sa face arrière 3, deux conducteurs électriques 8,9, formés par des broches, destinés à être amenés en contact respectivement avec deux conducteurs du peigne P (dont seul l'un 10 est visible sur la figure 5), lesdits conducteurs étant formés par des pinces. Ce peigne de raccordement P est également logé dans un boîtier comportant cinq compartiments 11,12,13,14,15 destinés chacun à coopérer avec un appareil A du type précité. Comme on le voit sur les figures 2 à 5, chaque compartiment 11 à 15 comporte deux orifices 16,17 sous forme de fente, destinés à autoriser l'introduction respectivement des deux conducteurs 8,9 de l'appareil A, chaque orifice 16,17 étant situé en regard d'une pince 10 située à l'intérieur du compartiment, comme ceci est visible sur la figure 5, la connexion réalisée étant du type à embrochage.

Le dispositif de raccordement électrique précité D comporte des moyens pour monter l'appareil A en rotation par rapport au peigne P autour d'un axe X (figure 7) sensiblement parallèle à la direction longitudinale du peigne P et à l'axe médian Y du rail R. Conformément à l'invention, l'axe de rotation X et les conducteurs précités 8,9, c'est à dire le point de connexion C, se situent d'un même côté de la face arrière 3 de l'appareil A, par rapport à l'axe médian Y du rail R. A cet effet, l'appareil A comporte une partie en saillie 18 située à l'intersection entre sa face supérieure 6 et sa face arrière 3, ladite partie en saillie 18 comportant les conducteurs précités 8,9 et un pivot de centrage 19, ledit pivot 19 constituant l'axe de rotation précité X. Lesdits conducteurs 8,9 et le pivot de centrage 19 font saillie sur la face arrière 3 de l'appareil A. Le pivot de centrage 19, constituant l'axe de rotation précité, est venu de matière avec le boîtier 1 de l'appareil et est donc réalisé en un matériau non conducteur. Ce pivot est situé à l'une des extrémités de la face arrière 3, et les conducteurs 8,9 sont situés entre le pivot 19 et le rail R.

Ce pivot de centrage 19 est monté à l'extrémité d'un bras 20 de forme arquée s'étendant à partir de la face arrière 3 de l'appareil A. Ce pivot 19 est formé par une pièce de section transversale en forme de goutte d'eau, la partie arrondie 21 étant orientée du côté de la face arrière 3 de l'appareil, tandis que la partie en pointe 22 est orientée du côté opposé à la face arrière 3.

Ce pivot 19 est destiné à coopérer avec une surface d'appui 23,24,25,26,27 réalisée sur le peigne P et constituant un support en rotation pour ledit pivot 19. Cette surface d'appui 23 à 27 est réalisée au fond d'une ouverture 28,29,30,31,32 réalisée dans chaque compartiment 1 à 15 et présente une forme d'entonnoir. Cette forme particulière de la surface d'appui 23 à 27, en coopération avec la forme du pivot 19, constitue des moyens de centrage du pivot et donc de l'appareil A par rapport au peigne P, destinés à assurer un bon positionnement latéral des appareils A, parallèlement à l'axe du peigne P, et en particulier des conducteurs 8,9 par rapport aux pinces 10 appartenant au peigne P. L'opération de raccordement électrique d'un appareil modulaire A sur un peigne P au moyen d'un dispositif D selon l'invention va être décrite dans ce qui suit :

L'appareil A est tout d'abord avancé jusqu'au voisinage du peigne P et le pivot de centrage 19 introduit dans l'ouverture 28 à 32 du compartiment correspondant 11 à 15, de telle façon que ce pivot 19 soit en contact avec la surface d'appui 23 à 27 réalisée dans ce compartiment 11 à 15, laquelle formant un appui en rotation pour le pivot 19. Puis, l'appareil A est entraîné en rotation dans le sens horaire. Pendant ce mouvement, les conducteurs 8,9 sont introduits dans les fentes 16,17 et sont reçus dans les pinces 10 de manière à réaliser la connexion de l'appareil A au peigne P.

Comme on le voit sur la figure 7, le couple de torsion T du rail R, pendant cette opération de raccordement, est pratiquement nul tel qu'illustré par la formule suivante :

$$T = (D1 \times F1) + (D2 \times F2).$$

Dans cette formule, D1 représente la distance entre le point de connexion C et l'axe médian Y du rail R. F1 représente l'effort d'embrochage. D2 représente la distance entre l'axe de rotation X de l'appareil A par rapport au peigne P et l'axe médian Y du rail R. F2 représente l'effort exercé au niveau du pivot.

En effet, l'axe de rotation X de l'appareil A se trouve plus éloigné de l'axe médian Y du rail R que du point d'embrochage C sur le peigne P.

Ainsi, ce nouveau positionnement de l'axe de rotation X procure une démultiplication supérieure des efforts d'embrochage. La réalisation proposée neutralise les efforts de torsion sur le rail et le peigne. Il en résulte une réduction des efforts transmis aux supports mécaniques que représentent le rail et le peigne, ainsi qu'un meilleur confort pour l'opérateur qui fournit un mouvement naturel plus faible et plus doux. La fiabilité de la position d'embrochage est également accrue, laquelle est indépendante de l'effort exercé par l'opérateur mais est alors garantie par la construction.

On notera également que la nécessité de prévoir un accrochage sur le rail DIN est supprimée du côté du point d'appui, c'est à dire du pivot de centrage. En effet, le pivot précité, qu'il soit agencé sur l'appareil ou selon une autre réalisation, sur le peigne, coopère avec une surface d'appui du peigne ou respectivement de l'appareil, pour assurer, avec un verrou situé de l'autre côté de la face arrière par rapport au support, et coopérant avec le support, la retenue de l'appareil sur le support.

La position et la tenue latérale de chaque appareil sont assurés par le système du point d'appui réalisé par le pivot.

La partie en saillie de l'appareil modulaire permet non seulement un mouvement de rotation plus aisé de l'appareil, mais également une meilleur accessibilité et ergonomie lorsque l'appareil est embroché.

Bien entendu, l'invention n'est pas limitée aux modes de réalisation décrits et illustrés qui n'ont été donnés qu'à titre d'exemple.

C'est ainsi que le pivot aurait tout aussi bien pu être prévu sur le peigne et coopérer avec une surface d'appui réalisée sur l'appareil, et ainsi, le peigne aurait pu être monté en rotation par rapport à l'appareil préalablement fixé sur le rail, les pinces conductrices pouvant aussi bien être prévues sur l'appareil que sur le peigne de même que les broches.

Au contraire, l'invention comprend tous les équivalents techniques des moyens décrits ainsi que leurs combinaisons si celles-ci sont effectuées suivant son esprit.

## Revendications

1. Dispositif de raccordement électrique d'un appareil modulaire électrique (1) à un peigne d'alimentation électrique P, ledit appareil (1) étant logé dans un boîtier de forme sensiblement parallélépipédique comportant une face arrière (3) de fixation à un rail de montage R et comportant au moins un conducteur rigide (8) situé sur ladite face arrière (3) de l'appareil (1), ledit appareil (1) et ledit peigne P étant aptes, au moment de l'opération de raccordement, à être montés en rotation l'un par rapport à l'autre autour d'un axe de rotation X, entre une position de déconnexion et une position de connexion du(des) conducteur(s) (8) de l'appareil (1) avec un(des) conducteur(s) (10) appartenant au peigne, **caractérisé en ce que** l'axe de rotation précité X et le point de connexion C du(des) conducteur(s) (8,9) de l'appareil A avec le(s) conducteur(s) (10) du peigne P, sont situés sur la face arrière de l'appareil, d'un même côté de ladite face arrière (3) de l'appareil A par rapport à l'axe central Y du rail R.

2. Dispositif de raccordement électrique selon la revendication 1, **caractérisé en ce que** l'axe de rotation X de l'appareil A par rapport au peigne P est plus éloigné de l'axe central Y du rail R que du point de connexion précité C.

3. Dispositif de raccordement électrique selon la revendication 1 ou 2, **caractérisé en ce que** le point de connexion précité C se situe entre l'axe de rotation X de l'appareil A par rapport au peigne P et l'axe central Y du rail précité R.

4. Dispositif de raccordement électrique selon l'une quelconque des revendications précédentes, **caractérisé en ce qu'**il comporte un pivot (19) prévu sur l'appareil A ou sur le peigne P destiné à coopérer avec une surface d'appui (23 à 27) réalisée sur le peigne P, ou respectivement sur l'appareil A, de manière que ladite surface d'appui (23 à 27) assure le guidage en rotation du pivot (19) entre les deux positions précitées de l'appareil A.

5. Dispositif de raccordement électrique selon la revendication 4, **caractérisé en ce que** le pivot précité (19) et le peigne P comportent des moyens de centrage de l'appareil A par rapport au peigne P, les dits moyens assurant le positionnement latéral de l'appareil A par rapport au peigne P parallèlement à la direction longitudinale du peigne P.

6. Dispositif de raccordement électrique selon la revendication 4 ou 5, **caractérisé en ce que** le pivot précité (19) étant supporté par l'appareil A, ce pivot (19) est venu de matière avec le boîtier (1) de l'appareil A.

7. Dispositif de raccordement électrique selon la revendication 5 ou 6, **caractérisé en ce que** le pivot précité (19), agencé sur l'appareil A ou sur le peigne P, coopère avec une surface d'appui (23,24,25,26,27) du peigne P ou respectivement de l'appareil A, pour assurer, avec un verrou situé de l'autre côté de la face arrière (3) par rapport au rail R et coopérant avec ledit rail R, 1a retenue de l'appareil A sur le rail R.

8. Dispositif de raccordement électrique selon l'une quelconque des revendications précédentes, **caractérisé en ce que** la connexion précitée est du type à embrochage.

9. Dispositif selon la revendication 8, **caractérisé en ce que** le(les) conducteur(s) (8,9) de l'appareil A est (sont) formé(s) par une(des) broche(s), tandis que le(les) conducteur(s) du peigne, est(sont) formé(s) par une(des) pince(s).

## Claims

1. Device for electrical connection of a modular electrical equipment unit (1) to a power supply comb P, said equipment unit (1) being housed in a case of substantially parallelepipedic shape comprising a rear panel (3) for fixing to a mounting rail R and comprising at least one rigid conductor (8) located on said rear panel (3) of the unit (1), said unit (1) and said comb P being able, at the time the connection operation is performed, to be fitted rotationally with respect to one another around a rotation axis X between a disconnected position and a connected position of the conductor(s) (8) of the equipment unit (1) with one of the conductor(s) (10) belonging to the comb, **characterized in that** the above-mentioned axis of rotation X and the connection point C of the conductor(s) (8,9) of the equipment unit A with the conductor(s) (10) of the comb P are located on the rear panel of the equipment unit, on the same side of said rear panel (3) of the equipment unit A with respect to the central axis Y of the rail R.

2. Electrical connection device according to claim 1, **characterized in that** the axis of rotation X of the equipment unit A with respect to the comb P is farther from the central axis Y of the rail R than from the above-mentioned connection point C.

3. Electrical connection device according to claim 1 or 2, **characterized in that** the above-mentioned connection point C is located between the axis of rotation X of the equipment unit A with respect to the comb P and the central axis Y of the above-mentioned rail R.

4. Electrical connection device according to any one of the foregoing claims, **characterized in that** it comprises a swivel-pin (19) provided on the equipment unit A or on the comb P and designed to co-operate with a bearing surface (23 to 27) provided on the comb P, or respectively on the equipment unit A, so that said bearing surface (23 to 27) performs guiding of the swivel-pin (19) in rotation between the two above-mentioned positions of the equipment unit A.

5. Electrical connection device according to claim 4, **characterized in that** the above-mentioned swivel-pin (19) and the comb P comprise means for centring the equipment unit A with respect to the comb P, said means performing lateral positioning of the equipment unit A with respect to the comb P in a direction parallel to the longitudinal direction of the comb P.

6. Electrical connection device according to claim 4 or 5, **characterized in that** the above-mentioned swivel-pin (19) being supported by the equipment unit A, this swivel-pin (19) is moulded with the case (1) of the equipment unit A.

7. Electrical connection device according to claim 5 or 6, **characterized in that** the above-mentioned swivel-pin (19), arranged on the equipment unit A or on the comb P, co-operates with a bearing surface (23,24,25,26,27) of the comb P or respectively of the equipment unit A, to perform securing of the equipment unit A on the rail R, in conjunction with a catch situated on the other side of the rear panel (3) with respect to the rail R and cooperating with said rail R.

8. Electrical connection device according to any one of the foregoing claims, **characterized in that** the above-mentioned connection is of the plug-in type.

9. Device according to claim 8, **characterized in that** the conductor(s) (8,9) of the equipment unit A is(are) formed by a pin(pins), whereas the conductor(s) of the comb is(are) formed by a contact grip(grips).

## Patentansprüche

1. Anordnung zum elektrischen Anschluss eines modularen Schaltgeräts (1) an einen Einspeise-Verbindungskamm P, welches Schaltgerät (1) in einem annähernd kastenförmigen Gehäuse mit einer Rückseite (3) zur Befestigung auf einer Montageschiene R und mindestens einem, an der Rückseite (3) des Schaltgeräts (1) angeordneten starren Leiter (8) angeordnet ist, wobei das genannte Schaltgerät (1) und der genannte Verbindungskamm P dazu ausgelegt sind, bei Herstellung der Anschlussverbindung aufeinander montiert zu werden, indem sie in einer relativen Drehbewegung um eine Drehachse X zwischen einer Verbindungsstellung und einer Trennstellung des Leiters bzw. mehrerer Leiter (8) des Schaltgeräts mit einem Leiter bzw. mehreren Leitern (10) des Verbindungskamms zueinander verschwenkt werden,
**dadurch gekennzeichnet, dass** die genannte Drehachse X und der Verbindungspunkt C zwischen dem Leiter bzw. den Leitern (8, 9) des Schaltgeräts A und dem Leiter bzw. den Leitern (10) des Verbindungskamms P auf der Rückseite des Schaltgeräts, in Bezug zur Mittelachse Y der Montageschiene R auf der gleichen Seite dieser Rückseite (3) angeordnet sind.

2. Elektrische Anschlussanordnung nach Anspruch 1, **dadurch gekennzeichnet, dass** die Drehachse X, um die das Schaltgerät A relativ zum Verbindungskamm P verschwenkt wird, in einem größeren Abstand von der Mittelachse Y der Montageschiene R als vom genannten Verbindungspunkt C angeordnet ist.

**3.** Elektrische Anschlussanordnung nach Anspruch 1 oder 2, **dadurch gekennzeichnet, dass** der genannte Verbindungspunkt C zwischen der Drehachse X, um die das Schaltgerät A relativ zum Verbindungskamm P verschwenkt wird, und der Mittelachse Y der genannten Montageschiene R angeordnet ist.

**4.** Elektrische Anschlussanordnung nach irgendeinem der vorhergehenden Ansprüche, **dadurch gekennzeichnet, dass** sie einen am Schaltgerät A oder am Verbindungskamm ausgebildeten Drehzapfen (19) umfasst, der dazu dient, mit einer am Verbindungskamm P bzw. am Schaltgerät A ausgebildeten Stützfläche (23 bis 27) zusammenzuwirken, so dass die genannte Stützfläche (23 bis 27) die drehwirksame Führung des Drehzapfens (19) zwischen den zwei genannten Stellungen des Schaltgeräts A gewährleistet.

**5.** Elektrische Anschlussanordnung nach Anspruch 4, **dadurch gekennzeichnet, dass** der genannte Drehzapfen (19) und der Verbindungskamm P Mittel zur Zentrierung des Schaltgeräts A in Bezug zum Verbindungskamm P umfassen, welche Mittel die seitliche Positionierung des Schaltgeräts A in Bezug zum Verbindungskamm P, parallel zur Längsrichtung des Verbindungskamms P gewährleisten.

**6.** Elektrische Anschlussanordnung nach Anspruch 4 oder 5, **dadurch gekennzeichnet, dass** der vom Schaltgerät A getragene, genannte Drehzapfen (19) einstückig mit dem Gehäuse (1) des Schaltgeräts A ausgeführt ist.

**7.** Elektrische Anschlussanordnung nach irgendeinem der Ansprüche 5 oder 6, **dadurch gekennzeichnet, dass** der am Schaltgerät A oder am Verbindungskamm P ausgebildete genannte Drehzapfen (19) mit einer Stützfläche (23, 24, 25, 26, 27) des Verbindungskamms P bzw. des Schaltgeräts A zusammenwirkt, um zusammen mit einer Verrastung, die, in Bezug zur Montageschiene R, auf der anderen Seite der Rückseite (3) angeordnet ist und mit der genannten Montageschiene R zusammenwirkt, die Halterung des Schaltgeräts A auf der Schiene R zu gewährleisten.

**8.** Elektrische Anschlussanordnung nach irgendeinem der vorhergehenden Ansprüche, **dadurch gekennzeichnet, dass** die genannte Verbindung als Steckverbindung ausgebildet ist.

**9.** Anordnung nach Anspruch 8, **dadurch gekennzeichnet, dass** der bzw. die Leiter (8, 9) des Schaltgeräts A durch einen oder mehrere Kontaktstifte, während der bzw. die Leiter des Verbindungskamms durch eine oder mehrere Kontaktzangen gebildet

werden.

Fig. 1

FIG. 2

Fig. 3

FIG.4

EP 1 424 756 B1

FIG. 5

FIG. 6

FIG. 7